# EUROPEAN PATENT APPLICATION

(11) **EP 2 103 989 A2**
(43) Date of publication of application: **23.09.2009**
(21) Application number: 09154777.8
(22) Date of filing: 10.03.2009
(51) Int. Cl.: G02F 1/13357

(54) **Display module, display-module fixing structure and liquid crystal display apparatus**

(30) Priority: 10.03.2008 JP 2008059438; 26.11.2008 JP 2008300621
(71) Applicant: Victor Company of Japan Ltd., Yokohama-shi, Kanagawa (JP)
(72) Inventor: Matsuzawa, Masaru, Kanagawa-ku Yokohama-shi Kanagawa (JP); Sakamoto, Michitaka, Kanagawa-ku Yokohama-shi Kanagawa (JP); Ishibashi, Hidetoshi, Kanagawa-ku Yokohama-shi Kanagawa (JP); Masuji, Shigehiro, Kanagawa-ku Yokohama-shi Kanagawa (JP)
(74) Representative: Jenkins, Peter David

(57) **Abstract**

A display module includes a base plate having a front surface section and a rear surface section that has at least one edge section, a display panel provided on the front surface section of the base plate, a circuit board provided in a specific zone of the rear surface section of the base plate in which the specific zone is closer to the edge section of the rear surface section of the base plate than a center of the rear surface section is, and a protecting cover to protect the circuit board and the base plate. The protecting cover has a higher section and a lower section that is closer to the base plate than the higher section is so that the higher section at least partially covers the circuit board while the lower section at least partially covers the base plate. The higher and lower sections give a space inside the display module but outside the protecting cover. The space has a height corresponding to a step created by the higher and lower sections and is located between the specific zone and the edge section of the rear surface section of the base plate.

## Description

### CROSS-REFERENCE TO RELATED APPLICATIONS

This application is based on and claims the benefit of priority from the prior Japanese Patent Application Nos. 2008 - 059438 filed on March 10, 2008 and 2008 - 300621 filed on November 26, 2008, the entire contents of which is incorporated herein by reference.

### BACKGROUND OF THE INVENTION

The present invention relates to a display module, a fixing structure for the display module and a display apparatus, for a thin display panel held by a frame having a narrow edge that surrounds the display panel.

In recent years, display apparatuses or television apparatuses to display images through a liquid crystal display module have rapidly become popular.

Such display apparatuses usually consist of: a display panel having a frame for holding a display module, a display screen thereof being installed in the frame for viewing; and a mount to support the display panel so that the display panel can be turned in the perpendicular and lateral directions.

Liquid crystal display modules require a backlight device with light sources, such as, cold cathode fluorescent lamps (CCFL) and external electrode fluorescent lamps (EEFL).

In such image display apparatuses, a display module is held by a frame with screws turned into bosses formed on the frame (such as disclosed in Japanese Un-examined Patent Publication No. 2000 - 305068) or with fixing members attached to the module and engaged with ribs formed on the frame (such as disclosed in Japanese Un-examined Patent Publication No. 2003 - 140117). The publications are referred to as Citations 1 and 2, respectively, hereinafter.

With higher popularity of image display apparatuses, there are higher demands for a thinner display panel and a frame for holding the screen of the display panel with a narrower frame edge that surrounds the screen, particularly on the upper edge section and the side edge sections, except for the bottom edge section closer to the mount for supporting the display panel.

The assembly of a display panel in which a display module is held by a frame with screws, such as disclosed in Citation 1, however, requires the space for bosses on the outer edge of the frame, thus restricting, at least, on the width of the edge that surrounds the screen, in achieving a narrower frame edge.

The assembly of a display panel in which a display module is held on a frame with fixing members of the module engaged with ribs of the frame, such as disclosed in Citation 2, is relatively effective in achieving a narrower frame edge. Such fixing members are, however, provided on the display module as protruding in the thickness direction, and hence not appropriate for achieving a thinner display panel. Particularly, a liquid crystal display panel requires power supply circuits, such as inverters, for supplying power to light sources, provided on the side edges of a display module on both sides of a screen, and hence posing a big problem in achieving a thinner display panel.

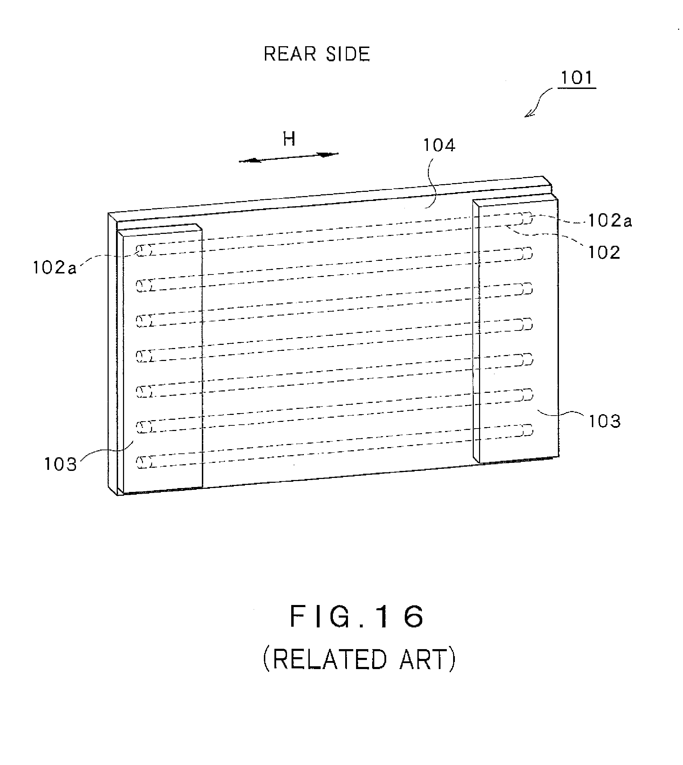

Such problems discussed above are explained more in detail with respect to FIG. 16.

FIG. 16 shows a schematic perspective rear view of a known liquid crystal display module 101, showing the rear side of the module viewed from above.

Installed in the liquid crystal display module 101 are several cold cathode fluorescent lamps (CCFL) 102, as backlights, arranged in parallel in the longitudinal direction H, on the front side of a base 104 of the module 101, in order to illuminating a screen (not shown) on the front side.

Also installed in the liquid crystal display module 101 are inverter circuits 103 provided on both rear edge sides of the base 104, that supply voltages to electrodes 102a of each CCFL 102 through CCFL wirings (not shown). Usually, the CCFL wirings are made as short as possible for stably driving the CCFL 102.

The inverter circuits 103 provided on both sides of the liquid crystal display module 101 pose difficulty in achieving a thinner display panel difficult.

### SUMMARY OF THE INVENTION

A purpose of the present invention is to provide a display module, a fixing structure for the display module and a display apparatus, achieving a thinner display panel held by a frame having a narrower edge that surrounds the display panel, with circuit boards on both sides of the display module.

The present invention provides a display module comprising: a base plate having a front surface section and a rear surface section that has at least one edge section; a display panel provided on the front surface section of the base plate; a circuit board provided in a specific zone of the rear surface section of the base plate in which the specific zone is closer to the edge section of the rear surface section of the base plate than a center of the rear surface section is; and a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step crated by the higher and lower sections and being located between the specific zone and the edge section of the rear surface section of the base plate.

Moreover, the present invention provides a fixing structure for fixing a display module, comprising: a cover; and a fixing component to fix the display module to the cover, wherein the display module includes: a base plate having a front surface section and a rear surface section that has at least one edge section; a display panel provided on the front surface section of the base plate; a circuit board provided in a specific zone of the rear surface section of the base plate in which the specific zone is closer to the edge section of the rear surface section of the base plate than a center of the rear surface section is; and a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step created by the higher and lower sections and being located between the specific zone and the edge section of the rear surface section of the base plate, wherein the fixing component is at least partially installed in the space and attached to the base plate.

Furthermore, the present invention provides a display apparatus comprising: a cover; a display module; and a fixing component to fix the display module to the cover, wherein the display module includes: a base plate having a front surface section and a rear surface section that has at least one edge section; a display panel provided on the front surface section of the base plate; a circuit board provided in a specific zone of the rear surface section of the base plate in which the specific zone is closer to the edge section of the rear surface section of the base plate than a center of the rear surface section is; and a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step created by the higher and lower sections and being located between the specific zone and the edge section of the rear surface section of the base plate, wherein the fixing component is at least partially installed in the space and attached to the base plate.

### BRIEF DESCRIPTION OF DRAWINGS

FIG. 1 shows external perspective views of a display apparatus according to the present invention, in which (a) and (b) show the rear and front sides, respectively, of the display apparatus viewed from above;
FIG. 2 shows a fragmentary perspective view of a display apparatus according to the present invention;
FIG. 3 is a perspective view illustrating a short bracket to be used as a first component of a fixing structure for a display apparatus according to the present invention;
FIG. 4 is a perspective view illustrating a long bracket used as a second component of the fixing structure for a display apparatus according to the present invention;
FIG. 5 is a perspective view illustrating an angle bracket used as a third component of the fixing structure for a display apparatus according to the present invention;
FIG. 6 is a perspective view illustrating a display module installed in a display apparatus according to the present invention;
FIG. 7 is a partial enlarged view illustrating a base section of the display module shown in FIG. 6, according to the present invention;
FIG. 8 is a perspective view of a protecting cover used for a liquid crystal display module installed in a display apparatus according to the present invention;
FIG. 9 is a partial sectional view illustrating a display panel shown in (a) of FIG. 1, taken on line S1 - S1 of FIG. 6;
FIG. 10 is a partial sectional view illustrating a modification to a display module installed in a display apparatus according to the present invention, taken on line S1 -S1 of FIG. 6;
FIG. 11 is a plan view illustrating a fixing structure for a display apparatus according to the present invention;
FIG. 12 is a perspective view illustrating the fixing structure for a display apparatus according to the present invention;
FIG. 13 is a plan view illustrating the fixing structure for a display apparatus according to the present invention;
FIG. 14 is a plan view illustrating the fixing structure for a display apparatus according to the present invention;
FIG. 15 is a perspective view illustrating the fixing structure for a display apparatus according to the present invention; and
FIG. 16 is a perspective view illustrating a known display module.

### DETAILED DESCRIPTION OF PREFERRED EMBODIMENTS

In the following disclosure and throughout the drawings, the same or analogous elements or components are given the same numerals or signs, the overlapping description being omitted if not necessary.

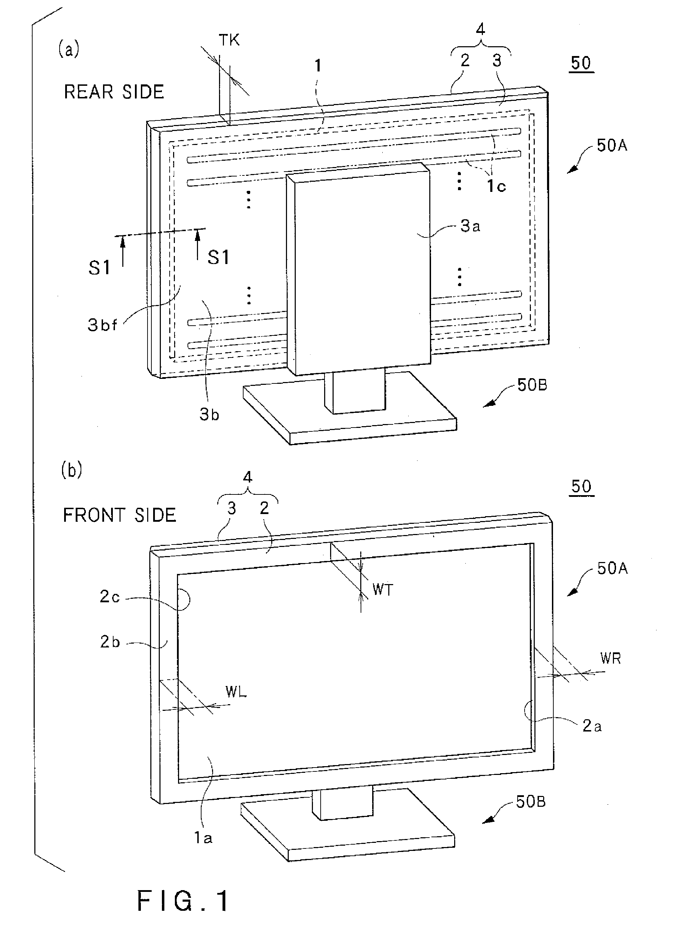

FIG. 1 shows external perspective views of a display apparatus 50 according to the present invention, in which (a) and (b) show the rear and front sides, respectively, of the display apparatus viewed from above.

The display apparatus 50 shown in FIG. 1 is a 46-inch television equipped with a liquid crystal display module 1, in this embodiment, that consists of: a display panel 50A having the display module 1 installed therein; and a mount 50B to support the display panel 50A so that the display panel 50A can be turned in the perpendicular and lateral directions.

The display panel 50A has a housing 4 with a front cover 2 that is a frame and a rear cover 3 that is a flat box with an opening on one side. Installed in the housing 4 is the liquid crystal display module 1 held by a fixing structure which will be described later.

Formed on the rear cover 3 is a protruding cover section 3a that protrudes in the rear side, as shown in (a) of FIG. 1. Installed in the cover section 3a are a circuit board for television signal processing, a power supply, etc. (not shown).

In the rear cover 3, the zone except for the protruding cover section 3a is referred to as a reference rear section 3b, hereinafter. The plane of the reference rear section 3b is referred to as a reference rear plane 3bf, hereinafter.

The front cover 2 has an opening 2a for a screen 1a of the liquid crystal display module 1 to be installed, as shown in (b) of FIG. 1. The frame section that surrounds the opening 2a is referred to as an edge section 2c. The front-side plane of the front cover 2 is referred to as a reference front plane 2b, hereinafter.

In (a) and (b) of FIG. 1, the dimensions of the housing 4 are defined as follows:
TK: a thickness of the reference rear section 3b, the zone except for the protruding cover section 3a, corresponding to the distance between the reference front plane 2b and the reference rear plane 3bf;
WT: a width between the upper edge of the front cover 2 and the opening 2a;
WL: a width between the left-side edge of the front cover 2 and the opening 2a; and
WR: a width between the right-side edge of the front cover 2 and the opening 2a.

According to the definition, a smaller thickness TK provides a thinner display panel 50A and shorter distances WT, WL and WR provide a narrower edge section 2c.

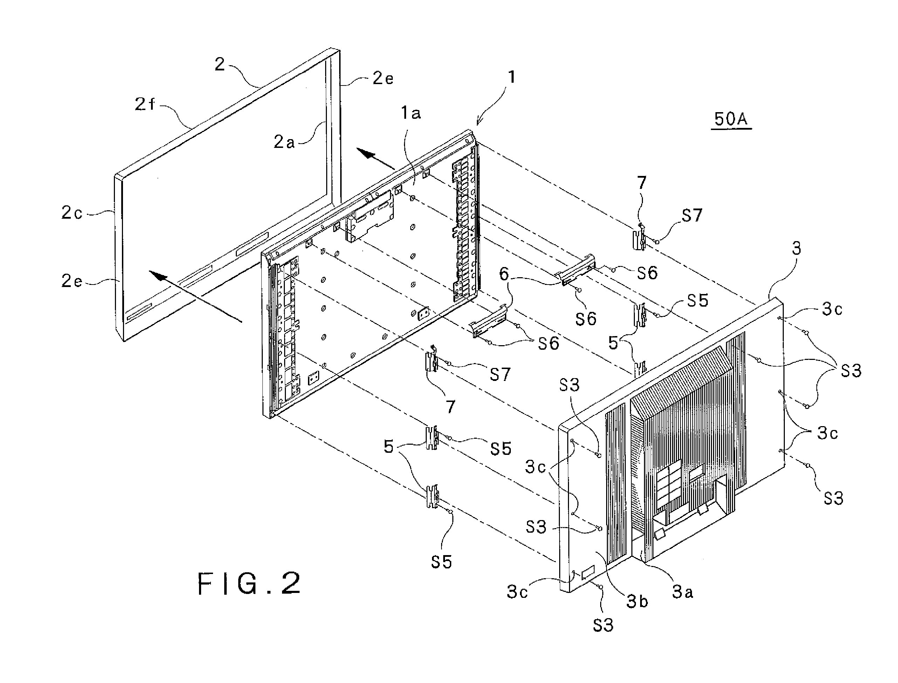

FIG. 2 shows an exploded perspective view of the display panel 50A viewed from the rear side, illustrating how the display panel 50A is assembled which is described below.

Two short brackets 5 (four short brackets in total) are attached to the liquid crystal display module 1 on both side edges and slid along the side edges by a specific distance. Then, the brackets 5 are engaged with side ribs (not shown in FIG. 2 and which will be described later) provided on the front cover 2 and fixed to the liquid crystal display module 1 with male screws S5.

Likewise, two long brackets 6 are attached to the liquid crystal display module 1 on the upper edge and slid along the upper edge by a specific distance. Then, the brackets 6 are engaged with upper ribs (not shown in FIG. 2 and which will be described later) provided on the front cover 2 and fixed to the liquid crystal display module 1 with male screws S6.

Moreover, a pair of angle brackets 7 are attached to the liquid crystal display module 1 on both side edges and slid along the side edges upwards by a specific distance. Then, the brackets 7 are engaged with side ribs and upper side ribs (not shown in FIG. 2 and which will be described later) provided on the front cover 2 and fixed to the liquid crystal display module 1 with male screws S7.

With the assembly procedure described above, the liquid crystal display module 1 is fit in the front cover 2 from the rear side of the front cover 2, with the short brackets 5, the long brackets 6, and the angle brackets 7 being engaged with several ribs after the brackets are slid in the orthogonal or lateral direction.

Although not shown in FIG. 2, the ribs are provided on both edges 2e and an upper edge 2f of a frame section 2c of the front cover 2, as protruding to the rear side of the front cover 2. The ribs can be formed by injection molding with a slide core mold.

The slide mechanism provided for each of the brackets 5 to 7 will be described later in detail.

The liquid crystal display module 1 is then fixed to the front cover 2 with the male screws S5 to S7.

The liquid crystal display module 1 is also fixed to the rear cover 3 with male screws S3 that are screwed into female screws (not shown) formed on the brackets 5 to 7, which will be described later in detail.

In this procedure, all of the male screws S3, S5, S6 and S7 are screwed from the rear to the front side, as shown in FIG. 2, thus achieving an efficient assembly procedure.

Moreover, the male screws S3, S5, S6 and S7 are not exposed to the front side of the front cover 2 but to the front side of the rear cover 3 (the rear side of the display panel 50A), thus maintaining a good appearance.

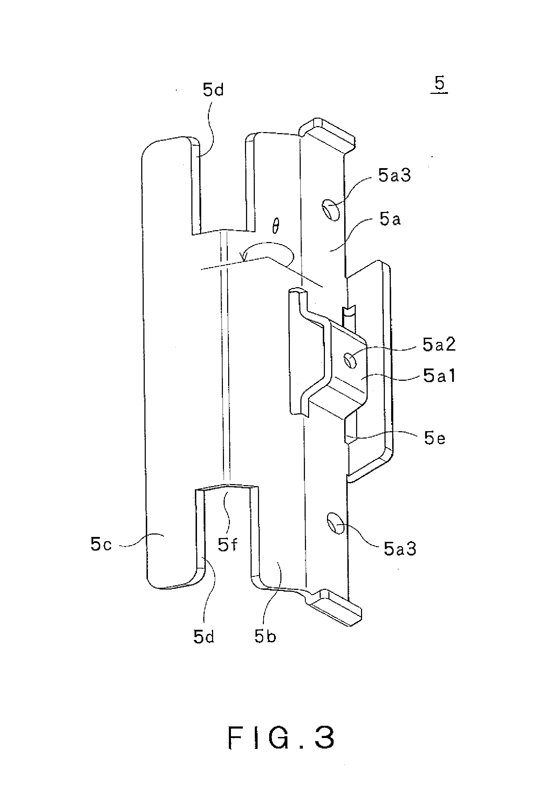

FIG. 3 is a perspective view illustrating each of the four short brackets 5 shown in FIG. 2.

The short bracket 5 is made of a pressed sheet metal, having a rectangular-like base section 5a and a two-step bent section 5f connected to the base section 5a at one longitudinal side thereof.

The two-step bent section 5f has a first bent section 5b and a second bent section 5c. The first bent section 5b is formed as being oblique to the base section 5a at about 45 degrees. The second bent section 5c is formed as being oblique to the base section 5a at about 90 degrees, or formed as having a reflex angle Θ of about (270 + α) degrees (α being a positive integer) to the base section 5a.

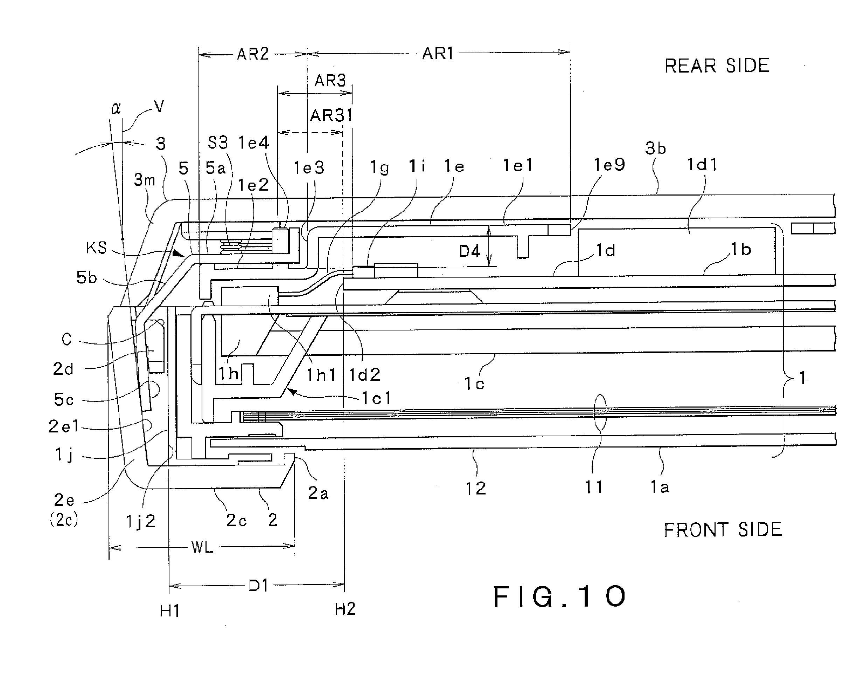

The angle α is also an oblique angle of an inner surface 2e1, shown in FIG. 10, of each edge 2e of the frame section 2c (FIG. 2). The sign V in FIG. 10 indicates a line perpendicular to the screen 1a.

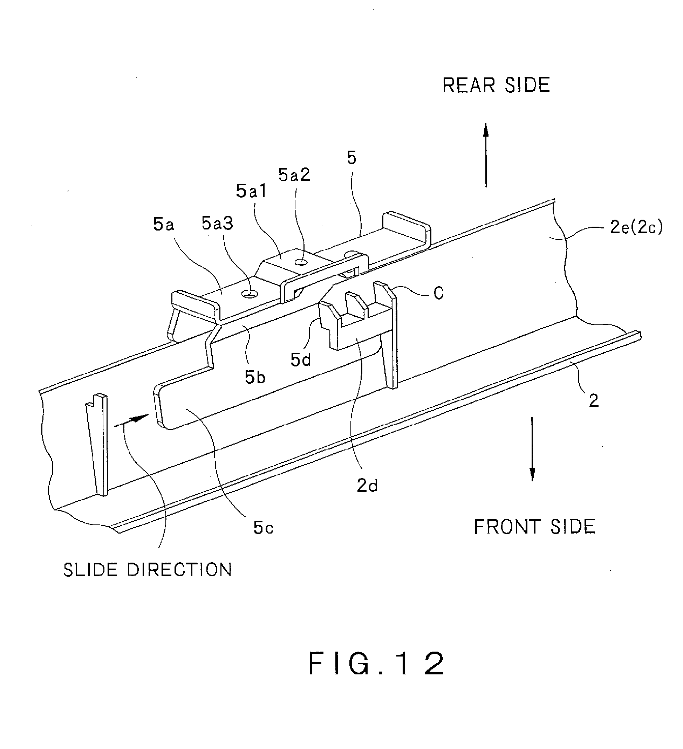

The two-step bent section 5f has slits 5d formed on both ends in a way that each slit 5d straddles the first and second bent sections 5b and 5c. Each slit 5d is provided so that it can engage with a rib 2d provided to the front cover 2 (FIG. 2), as shown in FIG. 12, which will be described later in detail.

Formed in the center of the base section 5a is a protruding section 5a1, that sticks out from the base section 5a in a direction opposite to the two-step bent section 5f, provided with a female screw 5a2. Formed along the protruding section 5a1 is a long oval hole 5e lying in the longitudinal direction of the base section 5a. Also formed on the base section 5a are a pair of through holes 5a3 on both sides of the protruding section 5a1.

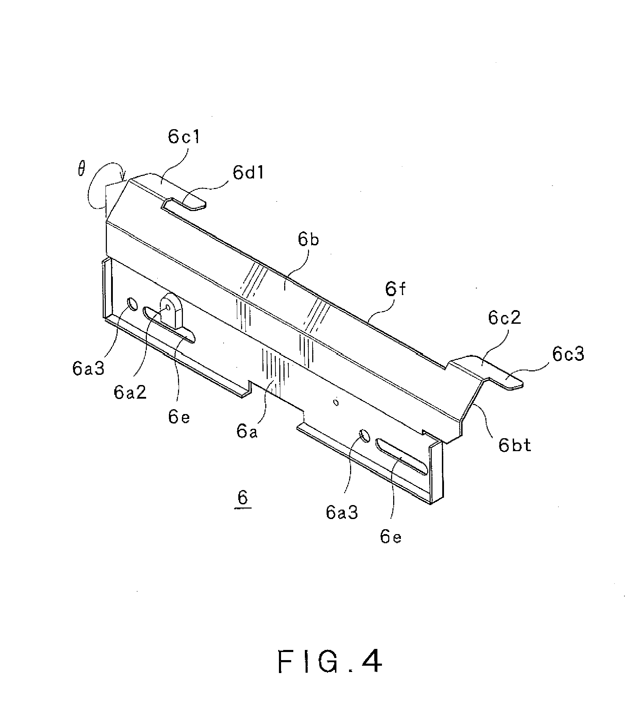

FIG. 4 is a perspective view illustrating each of the two long brackets 6 shown in FIG. 2.

The long bracket 6 is made of a pressed sheet metal, having a rectangular-like base section 6a and a two-step bent section 6f connected to the base section 6a at one longitudinal side thereof.

The two-step bent section 6f has a first bent section 6b and a pair of second bent sections 6c1 and 6c2 connected to the first bent section 6b at both ends thereof. The first bent section 6b is formed as being oblique to the base section 6a at about 45 degrees. The second bent sections 6c1 and 6c2 are formed as being oblique to the base section 6a at about 90 degrees, or formed as having a reflex angle Θ of about (270 + β) degrees (β being a positive integer) to the base section 6a. The angle β is also an oblique angle of the inner surface of the upper edge 2f of the frame section 2c (FIG. 2).

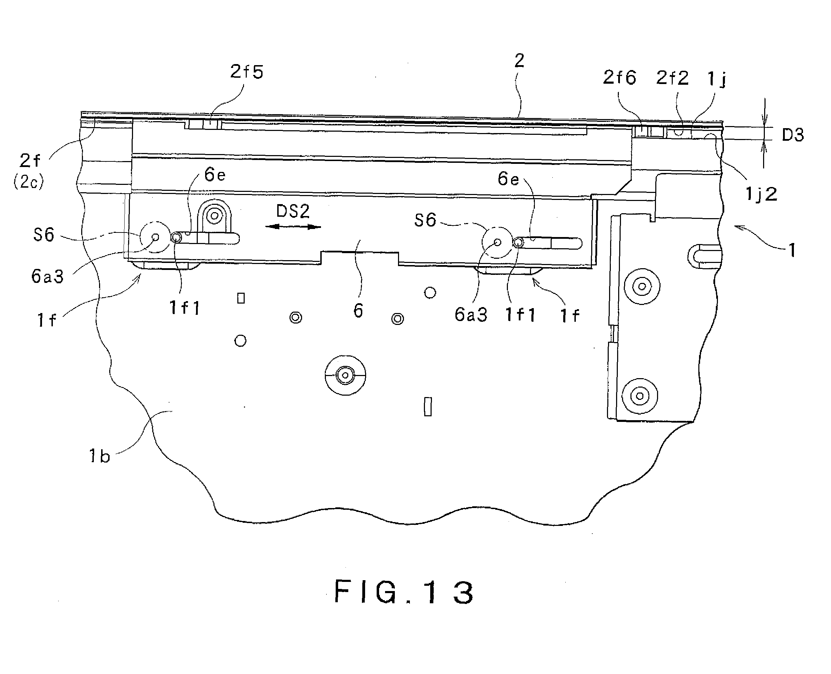

Provided to the first bent section 6b and the second bent section 6c1 is a slit 6d1 formed in a way that the slit 6d1 straddles the first bent section 6b and the second bent section 6c1. Provided to the second bent section 6c2 is a tongue piece 6c3 that sticks out from an end 6bt of the first bent section 6b. The slit 6d1 and the tongue piece 6c3 are provided so that they can engage with ribs 2f5 and 2f6, respectively, both provided to the upper edge 2f of the frame section 2c of the front cover 2 (FIG. 2), as shown in FIG. 13, which will be described later in detail.

The base section 6a is provided with a female screw 6a2, a pair of long oval holes 6e lying in the longitudinal direction of the base section 6a, and also a pair of through holes 6a3 adjacent to the long oval holes 6e in the longitudinal direction.

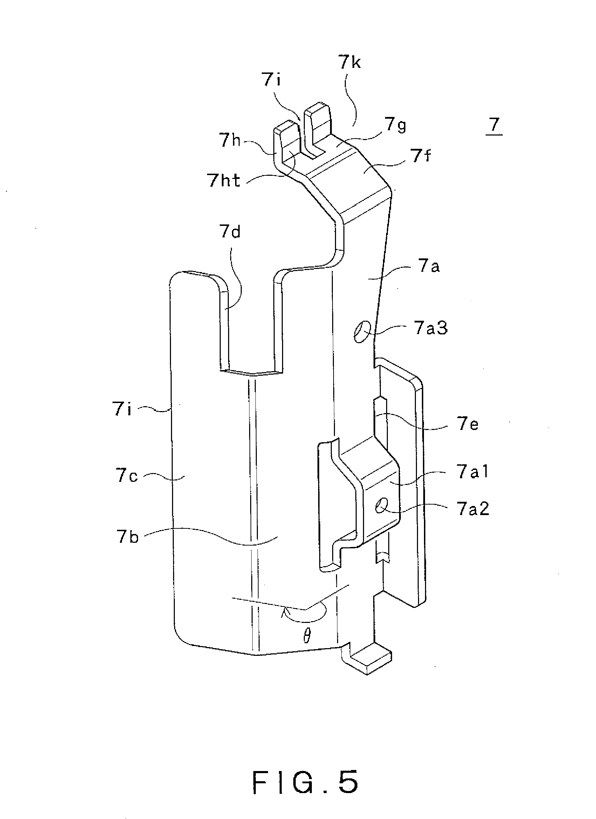

FIG. 5 is a perspective view illustrating each of the two angle brackets 7 shown in FIG. 2.

The angle bracket 7 is made of a pressed sheet metal, having a rectangular-like base section 7a, a two-step bent section 7j connected to the base section 7a at one longitudinal side thereof, and a three-step bent section 7k connected to the base section 7a at one longitudinal end thereof.

The two-step bent section 7j has a first bent section 7b and a second bent section 7c. The first bent section 7b is formed as being oblique to the base section 7a at about 45 degrees. The second bent section 7c is formed as being oblique to the base section 7a at about 90 degrees, or formed as having a reflex angle Θ of about (270 + β) degrees (β being a positive integer) to the base section 7a. The angle β is also an oblique angle of the inner surface of the upper edge 2f of the frame section 2c (FIG. 2).

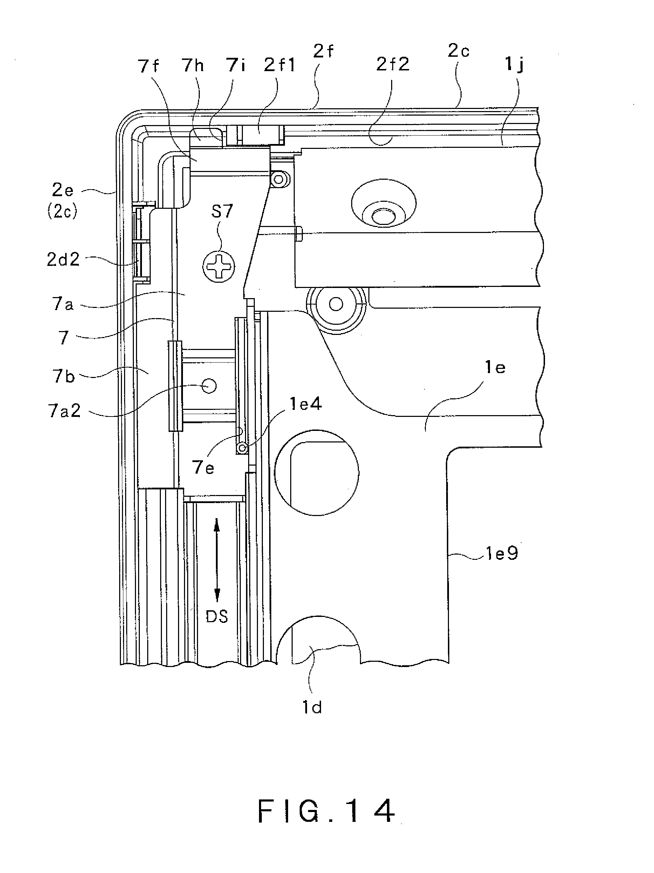

Provided to the first and second bent sections 7b and 7c is a slit 7d formed in a way that the slit 7d straddles the bent sections 7b and 7c. The slit 7d is provided so that it can engage with a rib 2d2 provided to the side edge 2e of the frame section 2c of the front cover 2 (FIG. 2), as shown in FIG. 14, which will be described later in detail.

The three-step bent section 7k has a first bent section 7f, a second bent section 7g, and a third bent section 7h. The first and second bent sections 7f and 7g are formed as being oblique to the base section 7a at about 45 and 90 degrees, respectively. The third bent section 7h is formed as being bent outwards so that it lies as parallel to the base section 7a.

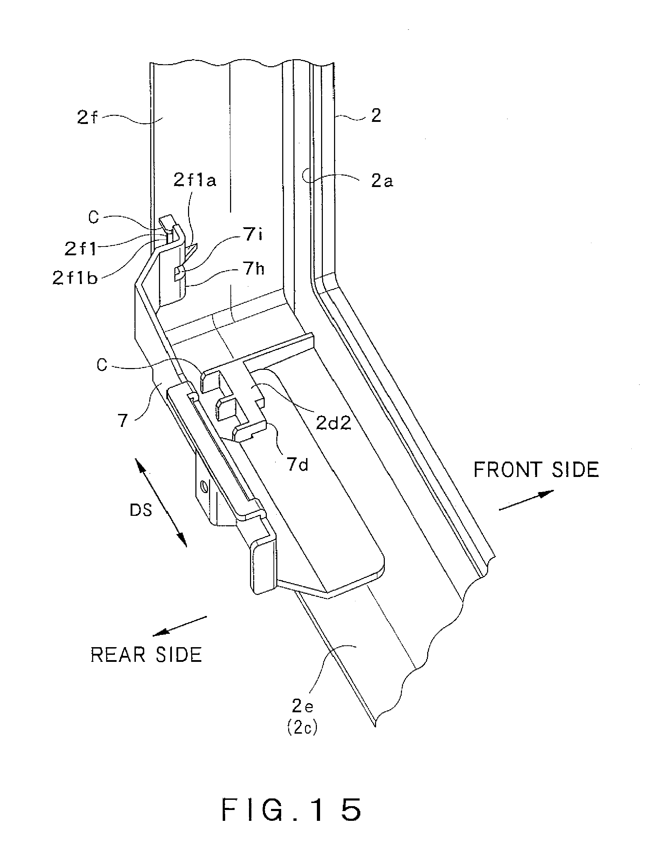

Provided to the second and third bent sections 7g and 7h is a slit 7i formed in a way that the slit 7i straddles the bent sections 7g and 7h. The slit 7i is provided so that it can engage with a rib 2f1 provided to the upper edge 2f of the frame section 2c of the front cover 2 (FIG. 2), as shown in FIG. 15, which will be described later in detail.

Formed on the base section 7a is a protruding section 7a1, that sticks out from the base section 7a in a direction opposite to the two- and three-step bent sections 7j and 7k, provided with a female screw 7a2. Formed along the protruding section 7a1 is a long oval hole 7e lying in the longitudinal direction of the base section 7a. Also formed on the base section 7a is a through hole 7a3.

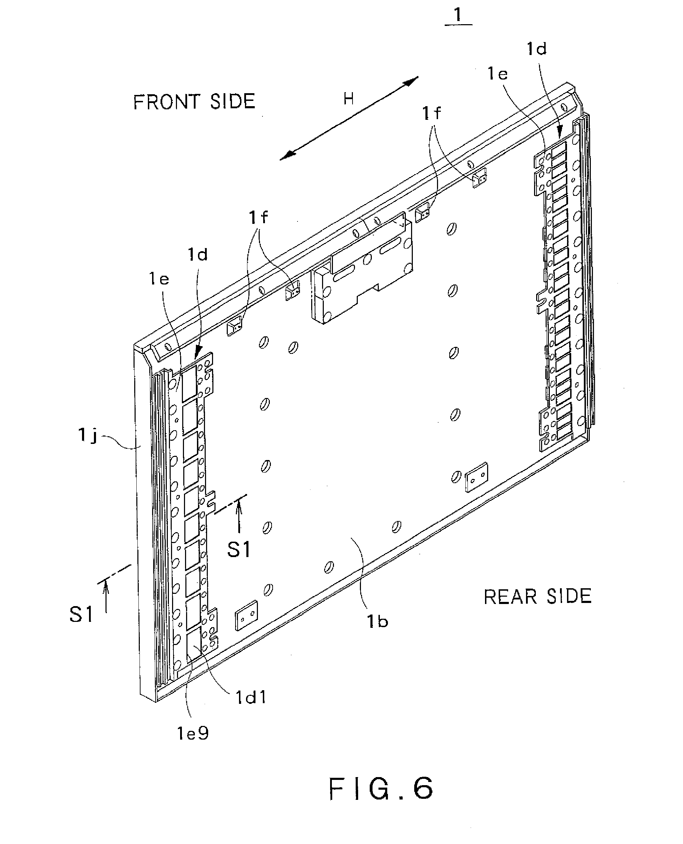

Described next is the liquid crystal display module 1 (FIG. 1) with reference to FIGS. 6 to 14.

FIG. 6 is a perspective view illustrating the liquid crystal display module 1 viewed from the rear side thereof.

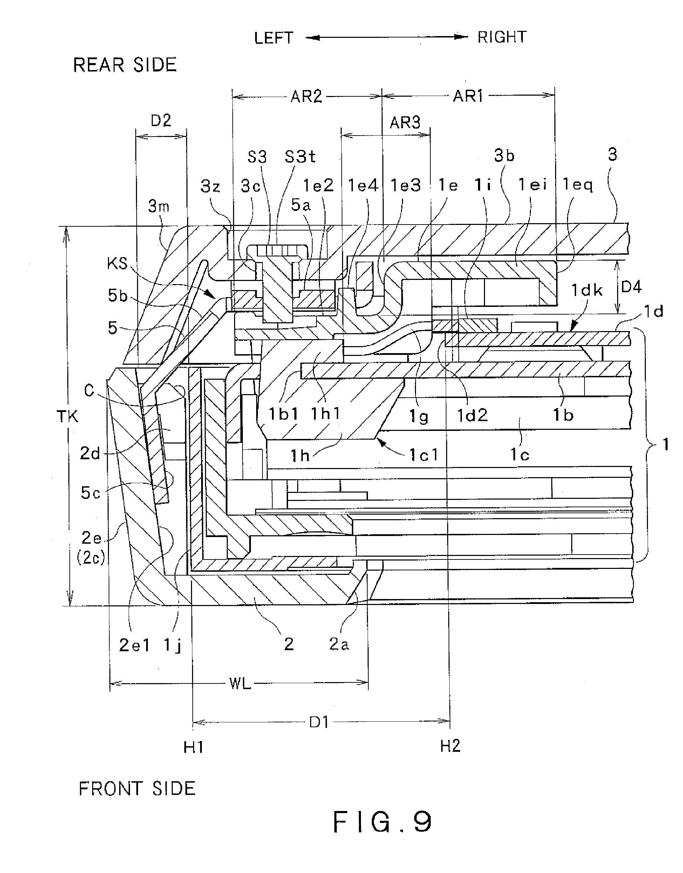

In FIG. 6, the liquid crystal display module 1 is provided with: a base plate 1b made of a sheet metal; several cold cathode fluorescent lamps 1c (referred to as CCFL 1c, hereinafter, not shown in FIG. 6 but in FIGS. 1 and 9) arranged in parallel, each CCFL 1c lying in the longitudinal direction H; a pair of circuit boards 1d (inverter circuit boards in this embodiment) arranged on both sides of the module 1 in the rear side thereof, fixed to the base plate 1b with male screws (not shown); a pair of protecting covers 1e made of resin to cover the inverter circuit boards 1d; and also a light-diffusing panel assembly 11 and a liquid crystal display panel 12 (both shown in FIG. 10) arranged in front of the CCFLs 1c.

Mounted on each circuit board 1d are inverter circuits 1dk (FIG. 9) that supply voltages to the CCFL 1c.

The liquid crystal display module 1 is supported by a frame section 1j in which the base plate 1b is installed.

The resin-made protecting covers 1e protect the inverter circuit boards 1d from damages and provide them with insulation. Moreover, the protecting covers 1e are provided so that a maintenance or service man can be protected from touching a high-voltage section, such as transformers 1d1, in the liquid crystal display module 1, and the module 1 can be protected from being damaged while shipped.

Provided on each protecting cover 1e are through holes 1e9 through which the transformers 1d1 are exposed, as described later.

The wiring between the inverter circuit boards 1d and the CCFLs 1c is described with reference to FIG. 9, a sectional view of the display panel 50A shown in (a) of FIG. 1, taken on line S1 - S1 of FIG. 6.

In FIG. 9, each CCFL 1c is provided with electrodes 1c1 on both ends, which is supported by rubber spacers 1h fixed as being engaged with long oval holes 1b1 of the base plate 1b. Each electrode 1c1 is connected with flexible CCFL wirings 1g to a connector 1i mounted on the associated inverter circuit board 1d at one end.

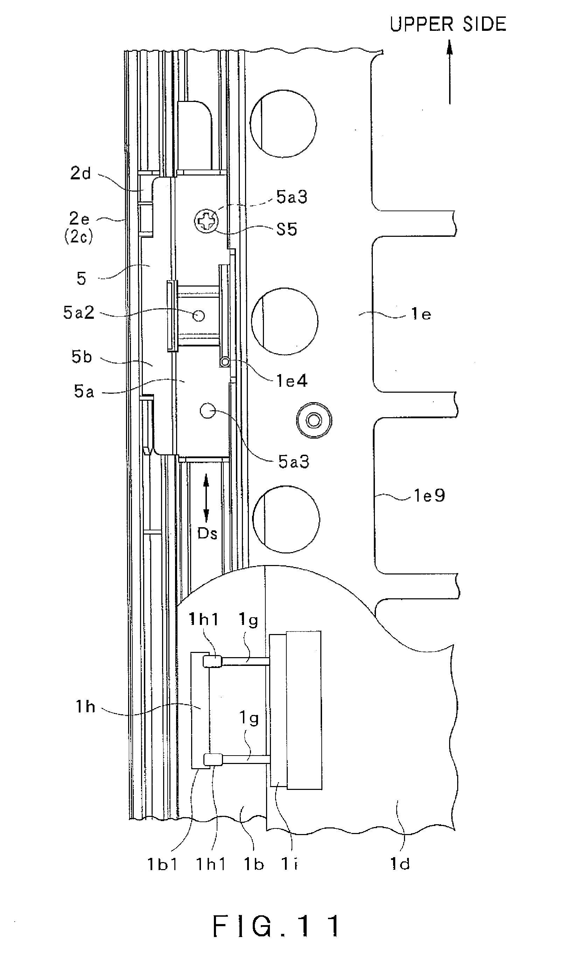

The wiring is also shown in FIG. 11, a plan view illustrating the fixing structure with each short bracket 5 (FIG. 2).

FIG. 11 shows the long oval hole 1b1 (FIG. 9) provided on the base plate 1b as being opened in the longitudinal direction along each of the left and right sides of the frame section 2c (FIG. 2).

Each rubber spacer 1h can be seen through the long oval hole 1b1. The rubber spacer 1h is provided with a pair of wire supporters 1h1 formed as protruding from the spacer 1h. The wire supporters 1h1 go through the long oval hole 1b1 at both ends, as if each hole end is pinched by the associated supporter 1h1, and stick out from the base plate 1b to the rear side (FIG. 1). The rubber spacer 1h are thus fixed to the base plate 1b with the wire supporters 1h1. Led out from the wire supporters 1h1 are the CCFL wirings 1g.

The base plate 1b is provided with four base sections 1f at the upper edge, formed by stamping, as protruding from the base plate 1b in the rear side, as shown in FIG. 6.

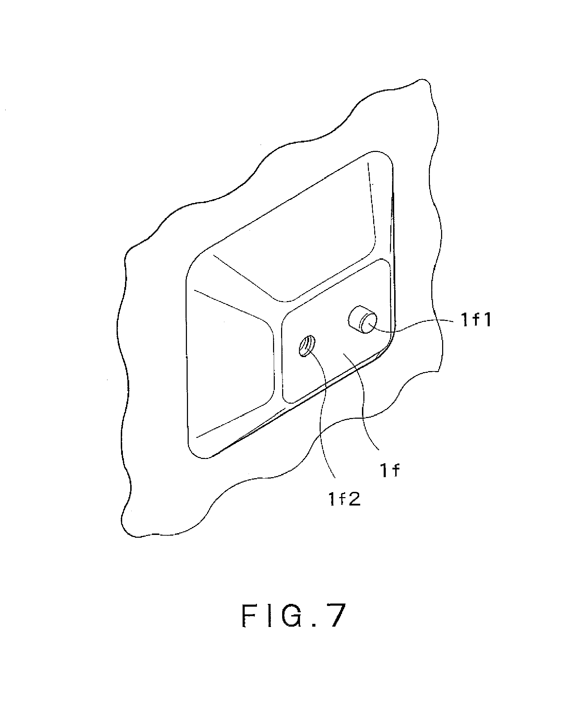

FIG. 7 is a partial enlarged view illustrating each base section 1f. Provided on the base section 1f are a dowel 1f1 and a female screw 1f2. The dowel 1f1 is engaged with the associated long oval hole 6e of the long bracket 6 (FIG. 4) so that the bracket 6 is slidable along the upper edge of the display panel 50A in FIG. 2.

The slide mechanism of the long bracket 6 allows the slit 6d1 and the tongue piece 6c3 (both shown in FIG. 4) to be engaged with the ribs 2f5 and 2f6, respectively, of the front cover 2 (FIG. 13). After the engagement, each screw S6 (FIG. 2) is inserted into the through hole 6a3 (FIG. 4) and screwed into the female screw 1f2 (FIG. 7) to fix the long bracket 6 to the base plate 1b (FIG. 6), as shown in FIG. 2.

In FIG. 6, the number of the transformers 1d1 mounted on the inverter circuits 1d for supplying high voltages to the CCFLs 1c is equal to the number of the CCFLs 1c. Each transformer 1d1 is much higher than other components mounted on the associated inverter circuit 1d. Thus, the through holes 1e9 are provided on the protecting covers 1e for the transformers 1d1 to be exposed therethrough to give a small thickness TK to the reference rear section 3b of the housing 4 in (a) of FIG. 1.

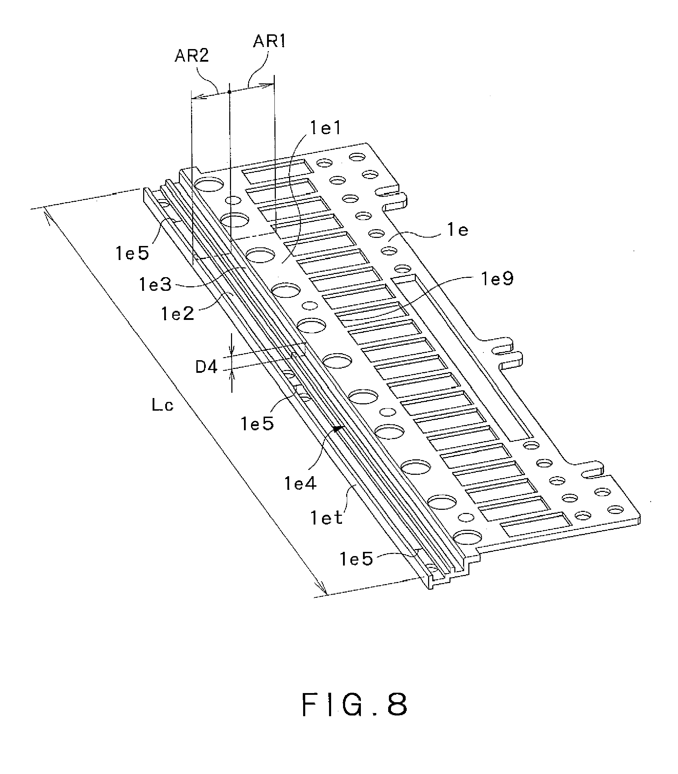

Described next with reference to FIGS. 8 and 9 is each resin-made protecting cover 1e shown in FIG. 6. FIG. 8 is a perspective view of the protecting cover 1e. FIG. 9 is a sectional view of the display panel 50A shown in (a) of FIG. 1, taken on line S1 - S1 of FIG. 6, as already mentioned.

As shown in FIG. 8, the protecting cover 1e is a rectangular-like flat cover provided with a stepped section 1e3 on a longitudinal edge section 1et side.

In FIGS. 8 and 9, the protecting cover 1e has: a higher section 1e1 that covers a zone AR1 in which the inverter circuit boards 1d are located; and a lower section 1e2 that covers a zone AR2, outside the zone AR1 in the longitudinal edge section 1et side, in which the wire supporters 1h1 are located. The lower section 1e2 is located closer to the base plate 1b than the higher section 1e1 is. Several dowels 1e4, also shown in FIG. 10, are provided to the lower section 1e2 at a specific interval along the longitudinal edge section 1et.

The stepped section 1e3 on the border of the zones AR1 and AR2 is located in a zone AR3, outside (in the left side in FIG. 9) an edge 1d2 of each inverter circuit board 1d, in which the CCFL wirings 1g are lying.

Since the CCFL wirings 1g are flexible, they can be provided as being bent on the stepped section 1e3, thus achieving higher space utility.

Each CCFL wiring 1g may be provided so that its end at the associated inverter circuit board 1d side is positioned at the inner side than the edge 1d2 of the circuit board 1d, as shown in FIG. 10 (a modification). In such an arrangement, the stepped section 1e3 (FIG. 8) is preferably located in a zone AR31 within the zone AR3 but terminated at the edge 1d2.

The degree of step of the stepped section 1e3 in the thickness direction, or the front - to - rear (thickness) direction is referred to as a step degree D4, as shown in FIGS. 8 to 10.

In FIGS. 9 and 10, each inverter circuit board 1d is provided as its edge 1d2 is positioned at a point H2 located inside the frame section 1j by a distance D1 from a point H1 that is the position of an inner side face 1j2 (shown only in FIG. 10) of the frame section 1j.

In each protecting cover 1e, as already described, the lower section 1e2 is located closer to the base plate 1b than the higher section 1e1 is. Here, the lower section 1e2 covers the zone AR2 in which the wire supporters 1h1 are located. The higher section 1e1 covers the zone AR1 in which the inverter circuit boards 1e are located.

The configuration described above provides spaces KS on both sides of the display panel 50A, each space KS corresponding to the step degree D4 of the stepped section 1e3 of the associated protecting cover 1e, on the rear side of the lower section 1e2 of the protecting cover 1e.

Then, the short brackets 5 are provided as the base sections 5a of the brackets 5 are installed in the spaces KS described above, which allows the thickness TK of the display panel 50A to be thinner with no effects of the thickness of each bracket 5 and other components associated with the bracket 5.

In FIG. 11, a plan view illustrating the fixing structure with the short bracket 5 (FIG. 2), the short bracket 5 is configured as slidable in a direction Ds while the long oval hole 5e (FIG. 3) is engaged with the associated dowel 1e4 (FIG. 8) of the protecting cover 1e.

Then, as shown in FIG. 12, the slide mechanism allows one of the slits 5d (FIG. 3) of each short bracket 5 to be engaged with the rib 2d of the front cover 2 (FIG. 2) so that the short bracket 5 is positioned at a certain location in the front - to - rear (thickness) direction. In FIG. 12, the rib 2d is formed as protruding inwardly from the side edge 2e in the frame section 2c of the front cover 2.

When one of the slits 5d (FIG. 3) of each short bracket 5 is engaged with the rib 2d of the front cover 2, as shown in FIGS. 11 and 12, the screw S5 (FIG. 2) is inserted into one of the through holes 5a3 and also one of several holes 1e5 provided on each protecting cover 1e, as shown in FIG. 8, and then screwed into a female screw (not shown) of the base plate (FIG. 6). Illustrated in FIG. 11 is that the screw S5 is inserted into the through hole 5a3 and the hole 1e5.

The fixing structure described above offers a short distance D2 between the outer surface of the frame section 1j of the liquid crystal display module 1 and the inner surface 2e1 of the edge 2e of the frame section 2c of the frame cover 2, as shown in FIG. 9. The distance D2 is very short almost equal to the thickness of each short bracket 5 with a narrow margin, thus achieving smaller widths WL and WR in (b) of FIG. 1.

Such a short distance D2 is also achieved by providing the second bent section 5c of each short bracket 5 so that the bent section 5c lies on the slant inner surface of the front cover 2 at the reflex angle Θ of about (270 + α) degrees (α being a positive integer) to the base section 5a.

In FIG. 13, a plan view illustrating the fixing structure with each long bracket 6 (FIG. 2), the long bracket 6 is configured as slidable in a direction Ds2 while each long oval hole 6e (FIG. 4) is engaged with the dowel 1f1 (FIG. 7) of the associated base section 1f of the base plate 1b (FIG. 6).

Then, as shown in FIG. 13, the slide mechanism allows the slit 6d1 and the tongue piece 6c3 (FIG. 4) of each long bracket 6 to be engaged with the ribs 2f5 and 2f6, respectively, of the front cover 2 (FIG. 2) so that the long bracket 6 is positioned at a certain location in the front - to - rear (thickness) direction, or in the direction orthogonal to the plan view of FIG. 13. In FIG. 13, the ribs 2f5 and 2f6 are formed as protruding inwardly from the upper edge 2f of the frame section 2c of the front cover 2.

When the slit 6d1 and the tongue piece 6c3 of each long bracket 6 are engaged with the ribs 2f5 and 2f6, respectively, of the front cover 2, as shown in FIG. 13, the screws S6 (FIG. 2) are inserted into the through holes 6a3 and screwed into the female screws 1f2 (FIG. 7) of the associated base section 1f of the base plate 1b (FIG. 6), thus long bracket 6 being fixed on the base plate 1b.

The fixing structure described above offers a short distance D3 between the outer surface of the frame section 1j of the liquid crystal display module 1 and the inner surface 2f2 of the upper edge 2f of the frame section 2c of the frame cover 2, as shown in FIG. 13. The distance D3 is very short almost equal to the thickness of each long bracket 6 with a narrow margin, thus achieving a smaller width WT in (b) of FIG. 1.

In FIG. 14, a plan view illustrating the fixing structure with each angle bracket 7 (FIGS. 2 and 5), the angle bracket 7 is configured as slidable in a direction Ds along a long oval hole 7e while the hole 7e is engaged with one of the dowels 1e4 (FIG. 8) of the associated protecting cover 1e.

Then, as shown in FIG. 15, the slide mechanism allows the slit 7d (FIG. 5) of each angle bracket 7 to be engaged with a rib 2d2 of the front cover 2 (FIG. 2) so that the angle bracket 7 is positioned at a certain location in the front - to - rear (thickness) direction. In FIG. 14, the rib 2d2 is formed as protruding inwardly from the side edge 2e in the frame section 2c of the front cover 2. FIG. 15 is a fragmentary perspective view of the frame section 2c and the angle bracket 7 of FIG. 14, viewed from lower right in FIG. 14.

Moreover, in FIG. 15, the slide mechanism allows the slit 7i (FIG. 5) of each angle bracket 7 to be engaged with a rib 2f1 of the front cover 2 (FIG. 2) so that the angle bracket 7 is positioned at a certain location in the front - to - rear (thickness) direction. In FIG. 15, the rib 2f1 is formed as protruding inwardly from the upper edge 2f in the frame section 2c of the front cover 2. The rib 2f1 is constituted by a longitudinal rib 2f1a that lies in the thickness direction in which the slit 7c receives the rib 2f1a and a lateral rib 2f1b that touches an upper surface 7ht of the third bent section 7h of the three-step bent section 7k (FIG. 5) to prevent the angle bracket 7 from being detached.

The engagement of the slits 7d and 7i with the ribs 2d and 2f1, respectively, prevents the front panel 2 from being deformed which otherwise tends to occur at the corners of the panel 2 for a larger screen.

As already described, when one of the slits 5d of each short bracket 5 (FIG. 3) is engaged with the rib 2d of the front cover 2, as shown in FIGS. 11 and 12, the screw S5 (FIG. 2) is inserted into one of the through holes 5a3 and also one of the holes 1e5 provided on each protecting cover 1e, as shown in FIG. 8, and then screwed into a female screw (not shown) of the base plate 1b (FIG. 6).

The fixing structure described above offers a short distance D2 between the outer surface of the frame section 1j of the liquid crystal display module 1 and the inner surface 2e1 of the edge 2e of the frame section 2c of the frame cover 2, as shown in FIG. 9. The distance D2 is very short almost equal to the thickness of each short bracket 5 with a narrow margin, thus achieving smaller widths WL and WR in (b) of FIG. 1.

For the angle brackets 7, when the slits 7d and 7i of each bracket 7 (FIG. 5) are engaged with the ribs 2d2 and 2f1 of the front cover 2, as shown in FIG. 14, the screw S7 (FIG. 2) is inserted into the through hole 7a3 (FIG. 5) of the bracket 7, and then screwed into a female screw (not shown) of the base plate 1b (FIG. 6).

The fixing structure described above offers a short distance D3 between an outer surface 1j2 of the frame section 1j of the liquid crystal display module 1 and an inner surface 2f2 of the frame section 2c of the frame cover 2, as shown in FIG. 13. The distance D2 is very short almost equal to the thickness of each angle bracket 7 with the thickness of the ribs 2d2 and 2f1 and also a narrow margin, thus achieving narrower width WT in (b) of FIG. 1.

When the short, long, and angle brackets 5, 6, and 7 are fixed to the base plate 1b with the screws S5, S6, and S7, respectively, the male screws S3 are screwed into the female screws 5a2, 6a2, and 7a2 of the brackets 5, 6, and 7, shown in FIGS. 3, 4, and 5, respectively, via through holes 3c of the rear cover 3, to fix the rear cover 3 to the liquid crystal display module 1, as shown in FIG. 2.

As shown in FIG. 9, the through holes 3c are provided in counterbores 3z of the rear cover 3 which are provided as entering the space KS on both sides of the display panel 50A. A screw head S3t of each male screw S3 is allowed to remain in the associated counterbore 3z and thus prevented from protruding from the reference rear plane 3bf of the rear cover 3, shown in (a) of FIG. 1, thus achieving a thinner liquid crystal display module 1.

As described above, the liquid crystal display module 1 is fixed to the front cover 2 with the short, long, and angle brackets 5, 6, and 7 using the ribs 2d, 2d2, 2f1, 2f5, and 2f6 formed on the front cover 2 and to the rear cover 3 with the brackets 5, 6, and 7 with the screws S3.

The ribs 2d, 2d2, 2f1, 2f5, and 2f6 are chamfered at their summits, as shown with a sign C in FIGS. 9, 10, 12, and 15, by which the liquid crystal display module 1 is smoothly and easily guided and fixed to the front cover 2. The height of each rib is adjusted as its summit almost touches the frame section 1j.

The ribs 2d, 2d2, 2f1, 2f5, and 2f6 adjusted as described above allow the liquid crystal display module 1 to be fixed to the front cover 2 at an accurate position, particularly, with respect to the opening 2a through which the screen 1a is exposed, as shown in (b) of FIG. 1, thus appropriate for mass production.

Moreover, since the heights of the ribs 2d, 2d2, 2f1, 2f5, and 2f6 are adjusted as their summits almost touch the frame section 1j, the ribs immediately touch and prevent the frame section 1j from being deformed when the front cover 2 is pressed by fingers for example, thus providing a highly rigid housing 4.

Furthermore, as already described, the short, long and angle brackets 5, 6 and 7 are provided with the first bent sections 5b, 6b and 7f, respectively. The bent sections 5b, 6b and 7f are formed as oblique to the base sections 5a, 6a and 7a, respectively, at about 45 degrees, as shown in FIGS. 3, 4 and 5, respectively. The configuration to the brackets 5, 6 and 7 allows a side face 3m (FIG. 9) of the rear cover 3 to be formed as being tapered to the rear side which makes the display panel 50A (FIG. 1) look like a slim panel, thus effective in panel design.

Although not limited, the following are recommended materials for the several components described above:
ABC resin for: the front cover 2, rear cover 3, and protecting covers 1e;
Zinc-coated steel sheet (t 1. 0) for: the short, long and angle brackets 5, 6, 7;
Silicon rubber for: the rubber spacers 1h; and
SPCC (Cold Rolled Steel Sheet, t 1. 0) for: the base plate 1b and frame section 1j.

Moreover, although not limited, the following are recommended dimensions for the several components described above:
In (a) and (b) of FIG. 1,
   39 mm: the thickness TK; and
   23 mm: WL, WR, and Wt.
In FIG. 9,
   32. 5 mm: the zone AR1;
   14. 5 mm: the zone AR2;
   9. 5 mm: the zone AR3;
   23. 3 mm: the distance D1; and
   5. 0 mm: the distance D2;
In FIG. 13,
   5. 0 mm: the distance D3;
In FIG. 8,
   5. 6 mm: the step degree D4 of each protecting cover 1e; and
   550 mm: the length Lc of each protecting cover 1e in longitudinal direction.

As described in detail, the inverter circuits 1d are installed in the liquid crystal display module 1 so that the edge of each circuit 1d is positioned inside the left and right side faces of the module 1. This installation gives the space KS (FIG. 9) on both sides of the circuit 1d, that corresponds to the thickness of each circuit 1d.

The space KS creates a rectangular shape in the liquid crystal display module 1, constituted by the length Lc of each protecting cover 1e in the longitudinal direction, the step degree D4 of the stepped section 1e3, and zone AR2 of the lower section 1e2, shown in FIG. 8. The volume V of the space KS is then given as V = Lc x D4 x AR2.

Provided in each space KS is a fixing means for fixing the liquid crystal display module 1 to the housing 4, which makes the housing 4 thinner at the location in which the fixing means is provided than at the location in which each inverter circuit 1d is installed, thus achieving a thinner housing 4.

The fixing means installed in the spaces KS described above are the short and angle brackets 5 and 7, in this embodiment, with the sheet-metal bent sections having the slits 5d and 7d, respectively, engaged with the ribs 2d, and 2d2 and 2f1, respectively, formed as protruding from the housing to inside, to fix the liquid crystal display module 1 in the housing 4. The fixing structure allows the gap between the module 1 in the housing 4 to be narrow as almost corresponding to the thickness of the the short and angle brackets 5 and 7.

Therefore, the display apparatus 50 having the configuration with the fixing structure described above can have a narrow edge section 2c concerning the widths WL, WR, and WT, as shown in (b) of FIG. 1.

It is further understood by those skilled in the art that the foregoing description is a preferred embodiment of the disclosed apparatus and that various changes and modifications may be made in the invention without departing from the spirit and scope of thereof.

For example, in the present invention, the angle brackets 7 are not essential components for a display apparatus with a relatively small display panel. Nevertheless, the angle brackets 7 are very effective components for a display apparatus with a large (for example, 42 inches or larger) display panel, to effectively prevent the front cover 2 from being deformed.

The display apparatus 50 described above requires the mount 50B to support the display panel 50A. However, the present invention is applicable to a display apparatus with no such mount, such as a hung-on-wall type.

Although the display apparatus 50 described above is a 46-inch television, the present invention is applicable to any screen size.

Although the display module 1 described above is a liquid crystal display module, the present invention is applicable to any types of display module, such as an organic electro-luminescence type.

Although the light sources described above are the CCFL 1c for the liquid crystal display module 1, the present invention can employ other tube-type light sources, such as EEFL, with inverter circuit boards are smaller or larger than those for CCFL.

Although the circuit boards 1d described above are the inverter circuit boards, any types of circuit boards are available in the present invention.

When the light source to be used is not CCFL, thus with no such CCFL wirings described above, the front cover is provided for protecting the circuit boards from damages in shipping, maintenance, etc., but still, the space KS described above is created.

Therefore, no matter what type of tube light source is used, the following technical idea of the present invention already discussed is applicable: the fixing means for fixing the display module 1 to the housing 4 allows the housing 4 to be made thinner at the location in which the fixing means is provided than at the location in which each inverter circuit 1d is installed, thus achieving a thinner housing 4.

Moreover, the fixing structure described above can be provided at the upper and lower edges of the housing 4 when the circuit boards 1d are provided at the upper and lower edges of the display module 1.

As disclosed above in detail, the present invention achieves a thinner display panel held by a frame having a narrower edge that surrounds the display panel.

## Claims

1. A display module comprising:
a base plate having a front surface section and a rear surface section that has at least one edge section;
a display panel provided on the front surface section of the base plate;
a circuit board provided in a specific zone of the rear surface section of the base plate in which the specific zone is closer to the edge section of the rear surface section of the base plate than a center of the rear surface section is; and
a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step created by the higher and lower sections and being located between the specific zone and the edge section of the rear surface section of the base plate.

2. The display module according to claim 1, wherein the display panel is a liquid crystal display panel having a plurality of tube-like light sources arranged in parallel between the base plate and the liquid crystal display panel, each light source having an electrode on one end thereof,
wherein the circuit board has a circuit for applying a voltage to each light source via a wiring connected between the circuit and the electrode,
each light source is provided so that the electrode is located in a zone between the space given inside the display module and the specific zone in which the circuit board is provided so that the higher section at least partially covers the circuit board while the lower section at least partially covers the electrode, with the wiring laying as straddling the higher and lower sections.

3. The display module according to claim 1, wherein a fixing component is at least partially installed in the space given inside the display module to fix the display module to a housing.

4. A fixing structure for fixing a display module, comprising:
a cover; and
a fixing component to fix the display module to the cover,
wherein the display module includes:
a base plate having a front surface section and a rear surface section that has at least one edge section;
a display panel provided on the front surface section of the base plate;
a circuit board provided in a specific zone of the rear surface section of the base plate in which the specific zone is closer to the edge section of the rear surface section of the base plate than a center of the rear surface section is; and
a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step created by the higher and lower sections and being located between the specific zone and the edge section of the rear surface section of the base plate,
wherein the fixing component is at least partially installed in the space given inside the display module and attached to the base plate.

5. The fixing structure according to claim 4, wherein the cover has a frame having an opening for the display panel to be installed and a rib that protrudes towards the rear surface section of the base plate, and the fixing component has a base section and a bent section having a slit and being connected to the base section, the base section being attached to the base plate so that the lower section of the protecting cover is inserted between the base section and the base plate, and the slit being engaged with the rib.

6. The display module according to claim 4, wherein the display panel is a liquid crystal display panel having a plurality of tube-like light sources arranged in parallel between the base plate and the liquid crystal display panel, each light source having an electrode on one end thereof,
wherein the circuit board has a circuit for applying a voltage to each light source via a wiring connected between the circuit and the electrode,
each light source is provided so that the electrode is located in a zone between the space given inside the display module and the specific zone in which the circuit board is provided so that the higher section at least partially covers the circuit board while the lower section at least partially covers the electrode, with the wiring laying as straddling the higher and lower sections.

7. A display apparatus comprising:
a cover;
a display module; and
a fixing component to fix the display module to the cover,
wherein the display module includes:
a base plate having a front surface section and a rear surface section that has at least one edge section;
a display panel provided on the front surface section of the base plate;
a circuit board provided in a specific zone of the rear surface section of the base plate in which the specific zone is closer to the edge section of the rear surface section of the base plate than a center of the rear surface section is; and
a protecting cover to protect the circuit board and the base plate wherein the protecting cover has a higher section and a lower section that is closer to the base plate than the higher section is so that the higher section at least partially covers the circuit board while the lower section at least partially covers the base plate, the higher and lower sections giving a space inside the display module but outside the protecting cover, the space having a height corresponding to a step created by the higher and lower sections and being located between the specific zone and the edge section of the rear surface section of the base plate,
wherein the fixing component is at least partially installed in the space given inside the display module and attached to the base plate.

8. The display apparatus according to claim 7, wherein the cover has a frame having an opening for the display panel to be installed and a rib that protrudes towards the rear surface section of the base plate, and the fixing component has a base section and a bent section having a slit and being connected to the base section, the base section being attached to the base plate so that the lower section of the protecting cover is inserted between the base section and the base plate, and the slit being engaged with the rib.

9. The display apparatus according to claim 7, wherein the display panel is a liquid crystal display panel having a plurality of tube-like light sources arranged in parallel between the base plate and the liquid crystal display panel, each light source having an electrode on one end thereof,
wherein the circuit board has a circuit for applying a voltage to each light source via a wiring connected between the circuit and the electrode,
each light source is provided so that the electrode is located in a zone between the space given inside the display module and the specific zone in which the circuit board is provided so that the higher section at least partially covers the circuit board while the lower section at least partially covers the electrode, with the wiring laying as straddling the higher and lower sections.
